# EUROPÄISCHE PATENTSCHRIFT

(11) **EP 2 607 330 B1**
(45) Veröffentlichungstag und Bekanntmachung des Hinweises auf die Patenterteilung: **04.03.2015**
(21) Anmeldenummer: 11194206.6
(22) Anmeldetag: 19.12.2011
(51) Int. Cl.: C04B 28/02, E04F 13/08, E04B 1/76, C04B 26/02, C04B 111/00, C04B 103/00

(54) **Dämmsystem umfassend ein Dämmelement sowie eine auf das Dämmelement aufzutragende Putzmasse**
Dampening system comprising a dampening element and a plaster mass to be applied to the dampening element
Système d'isolation comprenant un élément d'isolation et une masse d'enduit devant être appliquée sur l'élément d'isolation

(43) Veröffentlichungstag der Anmeldung: 26.06.2013
(73) Patentinhaber: STO SE & Co. KGaA, 79780 Stühlingen (DE)
(72) Erfinder: Holzer, Michael, 78315 Radolfzell am Bodensee (DE); Basler, Stefan, 79780 Stühlingen (DE); Hettich, Brigitte, 78766 Donaueschingen (DE); Weier, Andreas, 78647 Trossingen (DE)
(74) Vertreter: Gottschalk, Matthias

(56) Entgegenhaltungen:
- EP-A1- 1 039 058
- EP-A2- 2 216 306
- DE-A1- 3 202 960
- DE-A1- 19 623 412
- DE-A1- 19 839 295
- DE-A1-102008 043 988
- DE-A1-102009 003 196

## Beschreibung

Die Erfindung betrifft ein Dämmsystem zur Anbringung an einem bauseitigen Untergrund umfassend ein Dämmelement sowie eine auf das Dämmelement aufzutragende Putzmasse zur Ausbildung einer Putz- und/oder Armierungsschicht gemäß dem Oberbegriff des Anspruchs 1.

Ferner wird die Verwendung einer solchen Dämmsystems zur Schall- und/oder Wärmedämmung einer Gebäudewand oder -decke vorgeschlagen.

### Stand der Technik

Dämmsysteme der vorstehend genannten Art sind aus dem Stand der Technik beispielsweise als Wärmedämmverbundsysteme bekannt. Zum Einen sollen sie einen ausreichenden Wärmeschutz und zum Anderen eine möglichst dauerhaft optisch ansprechende Fassadengestaltung gewährleisten. Letzteres wird häufig dadurch erschwert, dass die Dämmelemente der Wärmedämmschicht in der Regel thermisch bedingten irreversiblen Verformungen unterliegen, welche sich außen an der Putzschicht in Form von Rissen, Abdrücken und/oder Verfärbungen abzeichnen. Plattenförmige Dämmelemente neigen insbesondere zum "Schüsseln", wobei sich das plattenförmige Dämmelement konkav verformt, so dass die Seitenkanten vom Untergrund abheben. Selbst durch ein- oder mehrlagig aufgebrachte Putz- und/oder Armierungsschichten sind derartige Verformungen weder zu vermeiden noch zu kaschieren, da diese in der Regel derart dünnschichtig aufgebracht werden, dass sie die Verformung des darunterliegenden Wärmedämmelementes nicht aufzuhalten vermögen. Ferner besteht die Gefahr, dass die aufgebrachten Putz- und/oder Armierungsschichten aufgrund der Verformungen des darunterliegenden Wärmedämmelementes reißen.

Darüber hinaus werden heute an die Wärmedämmung von Gebäuden immer höhere Anforderungen gestellt, so dass herkömmliche Wärmedämmstoffe in immer größeren Schichtstärken aufgebracht und/oder effektivere Wärmedämmstoffe eingesetzt werden müssen. Zwar sind Wärmedämmstoffe, mit denen sich hervorragende Wärmedämmwerte erzielen lassen, bekannt, diese weisen in der Regel jedoch andere Nachteile, wie beispielsweise eine geringe mechanische Festigkeit und/oder eine schlechte Verarbeitbarkeit, auf. Ein Wärmedämmelement aus einem Wärmedämmstoff mit einer geringen mechanischen Festigkeit weist zudem regelmäßig eine geringe Formstabilität auf, so dass die eingangs genannten Probleme der unerwünschten irreversiblen Formveränderungen und der damit einhergehenden Abzeichnungen nochmals verstärkt werden. Die Phenolharzplatte stellt beispielsweise ein solches Wärmedämmelement aus einem effektiven Wärmedämmstoff jedoch mit dem Nachteil einer geringen Formstabilität aufgrund schlechter hygrothermischer Eigenschaften dar.

Zur Vermeidung der Probleme wurden von Seiten der Dämmstoffindustrie bereits Wärmedämmstoffe bzw. Wärmedämmelemente vorgeschlagen, die einerseits eine verbesserte Wärmedämmwirkung und andererseits eine erhöhte Formstabilität aufweisen sollen. Diese Produkte beruhen in der Regel auf der Erkenntnis, dass durch Zugabe eines Pigments oder sonstiger athermaner, das heißt für IR-Strahlung undurchlässiger, Materialien die Wärmedämmwirkung eines Wärmedämmstoffs verbessert werden kann. Werden die Pigmente und Materialien zugleich derart gewählt oder im Wärmedämmelement angeordnet, dass das Wärmedämmelement an seiner Oberfläche überwiegend reflektierende Eigenschaften besitzt, kann aufgrund einer weniger starken Aufheizung zugleich eine erhöhte Formstabilität des Dämmelementes erzielt werden.

Ein derartiger Dämmstoff geht beispielsweise aus der DE 10 2006 018 528 A1 hervor. Der Dämmstoff weist sowohl Reflektor- als auch Absorberpartikel auf, wobei es sich jeweils um athermanes Material enthaltende Styrolpolymerisatpartikel handelt. Den Styrolpolymerisatpartikel ist zur Ausbildung der Reflektor- und Absorberpartikel entweder athermanes Material mit überwiegend reflektorischen oder absorbierenden Eigenschaften zugegeben worden.

Darüber hinaus sind aus dem Stand der Technik mehrschichtige Dämmelemente bekannt, um die spezifischen Vorteile verschiedener Dämmstoffe zu kombinieren. Eine mehrschichtige Wärmedämmplatte, welche bei Einhaltung der Plattendicke herkömmlicher Wärmedämmplatten aus weißem oder schwarz-weißem EPS in Bezug auf die Wärmedämmung mindestens die Anforderungen der Wärmeleitgruppe 035 erfüllt, geht beispielsweise aus der Gebrauchsmusterschrift DE 20 2010 001 674 U1 hervor. Die Dämmplatte ist hierzu dual oder sandwichartig mit einem Kern aus einem Hartschaumstoff und mindestens einer Deckschicht aus einem Polystyrolpartikelschaum gebildet. Als Kernmaterial wird insbesondere Polyurethan, Phenolharz oder eine Mischung hieraus vorgeschlagen. Ferner sollen hydrophobierte, hochdisperse Kieselsäurepartikel Einsatz finden können. Während das Kernmaterial eine niedrige Wärmeleitfähigkeit gewährleistet, trägt das Deckmaterial zur Kompensierung der mechanischen Nachteile des Kernmaterials bei.

Die eingangs genannten Probleme lassen sich ferner dadurch vermeiden oder zumindest verringern, dass hinsichtlich ihrer mechanischen Festigkeit verbesserte Armierungsgewebe und/oder Armierungsfasern enthaltende Putzmassen zur Ausbildung einer Armierungs- bzw. Unterputzschicht eingesetzt werden. Beispielhaft wird in diesem Zusammenhang auf die Offenlegungsschrift DE 10 2004 048 584 A1 verwiesen.

Ausgehend von dem vorstehend genannten Stand der Technik liegt der vorliegenden Erfindung die Aufgabe zugrunde, ein Dämmsystem umfassend wenigstens ein Dämmelement sowie eine auf das Dämmelement aufzutragende Putzmasse zur Ausbildung einer Putz- und/oder Armierungsschicht anzugeben, welche nicht zu den unerwünschten Fugenabzeichnungen an der Oberfläche neigt. Insbesondere soll auf diese Weise das Dämmsystem den Einsatz effektiver Dämmstoffe und/oder den Einsatz von Dämmelementen mit nur geringer mechanischer Festigkeit und/oder schlechten hygrothermischen Eigenschaften ermöglichen.

Die Aufgabe wird gelöst durch ein Dämmsystem mit den Merkmalen des Anspruchs 1. Vorteilhafte Weiterbildungen der Erfindung sind in den Unteransprüchen angegeben.

### Offenbarung der Erfindung

Das vorgeschlagene Dämmsystem zur Anbringung an einem bauseitigen Untergrund umfasst wenigstens ein Dämmelement sowie eine auf das Dämmelement aufzutragende Putzmasse zur Ausbildung einer Putz- und/oder Armierungsschicht. Erfindungsgemäß umfasst die Putzmasse eine pastöse erste Komponente sowie eine vor dem Auftragen auf das Dämmelement mit der pastösen ersten Komponente zu vermischende weitere Komponente. In der pastösen ersten Komponente sind sowohl mineralische als auch organische Bindemittel enthalten. Das Gewichtsverhältnis organisches Bindemittel zu mineralischem Bindemittel bezogen auf den Bindemittelanteil der pastösen ersten Komponente beträgt dabei 1:0,5 bis 1:2, vorzugsweise 1:0,75 bis 1:1,25.

Aufgrund der pastösen ersten Komponente, welche sowohl mineralische als auch organische Bindemittel enthält, weist eine hieraus ausgebildete Putz- und/oder Armierungsschicht Eigenschaften auf, welche die Vorzüge mineralischer Systeme und organischer Systeme in sich vereint. Beispielsweise werden die mechanischen Eigenschaften, insbesondere die Biegezugfestigkeit und die Druckfestigkeit verbessert, wobei die Werte weitgehend denen mineralischer Systeme entsprechen. Hinsichtlich der Eigenschaften Bruchdehnung und Zugfestigkeit nähert sich das System den Werten rein organisch gebundener Systeme an. Somit werden jeweils die positiven Eigenschaften eines Systems übernommen, ohne dass sich die gewünschten Wirkungen gegenseitig aufheben oder abschwächen. Zum Beispiel weist eine aus einer erfindungsgemäßen Putzmasse hergestellte Putz- und/oder Armierungsschicht im Vergleich zu herkömmlichen, rein mineralisch gebundenen Putzschichten eine verringerte Wasseraufnahmefähigkeit auf, welche sich wiederum positiv auswirkt.

Um den Auftrag der Putzmasse des Systems in einer Schichtstärke zu ermöglichen, die den Schichtstärken rein mineralisch gebundener Putzschichten nahe kommt, wird eine zweikomponentige Zusammensetzung der Putzmasse zur Ausbildung der Putz- und/oder Armierungsschicht vorgeschlagen. Die zweite bzw. weitere Komponente dient vorrangig dazu, den Prozess der Aushärtung bzw. Trocknung der Putzmasse zu beschleunigen und wird demzufolge erst kurz vor dem Auftragen mit der Grundkomponente vermischt. Auf diese Weise ist ein vollständiges Durchtrocknen der aufgebrachten Putz- und/oder Armierungsschicht selbst bei größeren Schichtstärken gewährleistet. Die größeren Schichtstärken erleichtern den Ausgleich von Unebenheiten des Untergrundes bzw. der Dämmplattenebene und gewährleisten demnach eine größere Applikationssicherheit.

Im Unterschied zur pastösen ersten Komponente liegt die weitere Komponente vorzugsweise als beizumischendes Trockenpulver vor. Alternativ kann die weitere Komponente auch als Dispersion oder Lösung vorliegen.

Bevorzugt sind in der pastösen ersten Komponente 1 bis 30 Gew.-%, vorzugsweise 2 bis 20 Gew.-%, weiterhin bevorzugt 2 bis 15 Gew.-% mineralische Bindemittel, wie beispielsweise Zement, insbesondere Calciumaluminatzement, Gips, Kalkhydrat, Wasserglas und/oder Kieselsol bezogen auf das Gesamtgewicht der pastösen ersten Komponente enthalten. Durch das enthaltene mineralische Bindemittel werden insbesondere die mechanischen Eigenschaften der Putz- und/oder Armierungsschicht eines an einem bauseitigen Untergrund angebrachten erfindungsgemäßen Dämmsystems verbessert. Im Unterschied zu Putzschichten, die aus rein mineralisch gebundenen Putzmassen hergestellt sind, weist eine Putzschicht aus einer erfindungsgemäßen Putzmasse zudem deutlich verbesserte Werte im Hinblick auf die Bruchdehnung auf. Dies ist wiederum auf den Anteil organischer Bindemittel zurückzuführen.

Weiterhin bevorzugt sind in der pastösen ersten Komponente 1 bis 30 Gew.-%, vorzugsweise 2 bis 20 Gew.-%, weiterhin vorzugsweise 2 bis 15 Gew.-% organische Bindemittel, wie beispielsweise Polymerdispersionen und/oder Silikonharzdispersionen, enthalten. Durch den Anteil organischer Bindemittel wird insbesondere die Elastizität der Putz- und/oder Armierungsschicht eines an einem bauseitigen Untergrund angebrachten erfindungsgemäßen Dämmsystems verbessert. Dies drückt sich insbesondere in einem nur leicht erhöhten Wert in Bezug auf den Elastizitätsmodul der Putz- und/oder Armierungsschicht trotz der enthaltenen mineralischen Bindemittel aus. Im Vergleich zu einer ausschließlich mineralische Bindemittel enthaltenden Putz- und/oder Armierungsschicht kann auf diese Weise das Bruchdehnungsverhalten deutlich verbessert werden.

Weiterhin ist in der pastösen ersten Komponente ein Verzögerer, insbesondere Borsäure, Weinsäure, Zitronensäure, Phosphorsäure, deren Salze und/oder deren Derivate enthalten. Der Verzögerer verhindert, dass die pastöse erste Komponente vorzeitig abbindet. Insofern kann die erste Komponente als pastöse Masse vorgehalten werden, so dass die Zugabe eines Lösungsmittels, vorzugsweise Wasser, vor Ort auf der Baustelle entfallen kann. Dies vereinfacht die Verarbeitung der Putzmasse. Es bedarf nur noch der Beimischung der weiteren Komponente, um eine verbrauchsfertige Putzmasse zu erhalten. Durch den Verzögerer weist die verbrauchsfertige Putzmasse zudem eine ausreichend lange offene Verarbeitungszeit auf. Soweit erforderlich kann zusätzlich über die Zugabe von Wasser die Viskosität der Masse eingestellt werden.

Um die Wirkung des Verzögerers aufzuheben bzw. den Prozess des Aushärtens und des Trocknens zu initiieren, ist ferner in der weiteren Komponente ein Beschleuniger enthalten. Als Beschleuniger können Alkali- und/oder Erdalkaliverbindungen, wie Oxide, Hydroxide, Carbonate, Sulfate sowie deren Mischungen, insbesondere Lithiumhydroxid, Lithiumcarbonat und/oder Lithiumsulfat, eingesetzt werden.

Zur Einstellung einer optimalen offenen Verarbeitungszeit der angemischten Putzmasse wird ferner vorgeschlagen, dass der Anteil der pastösen ersten Komponente wenigstens 70 Gew.-%, vorzugsweise wenigstens 90 Gew.-%, und/oder der Anteil der weiteren Komponente maximal 30 Gew.-%, vorzugsweise maximal 10 Gew.-%, bezogen auf das Gesamtgewicht der verarbeitungsfertigen Putzmasse beträgt.

Des Weiteren wird vorgeschlagen, dass das Dämmelement eine Schall- und/oder Wärmedämmplatte ist und ein Schall- und/oder Wärmedämmmaterial, wie beispielsweise Phenolharz, expandiertes Polystyrol, Polyurethan und/oder Mineralwolle, umfasst. Soweit mehrere Dämmmaterialien zum Einsatz gelangen, sind diese vorzugsweise in Schichten angeordnet, so dass das Dämmelement mehrschichtig aufgebaut ist. Darüber hinaus können auch verschiedene Dämmmaterialien bei der Herstellung des Dämmelementes vermischt werden, so dass das hieraus hergestellte Dämmelement trotz Verwendung unterschiedlicher Dämmmaterialien einen weitgehend homogenen Aufbau aufweist. Besonders bevorzugt finden Dämmmaterialien mit besonders niedriger Wärmeleitfähigkeit Einsatz. Bevorzugt wird daher die Verwendung von Phenolharz als Dämmmaterial vorgeschlagen.

Gemäß einer bevorzugten Ausführungsform der Erfindung umfasst das Dämmsystem demzufolge wenigstens eine Phenolharzplatte als Dämmelement. Auf diese Weise können sehr gute Wärmedämmwerte erzielt werden, wobei zugleich durch die aufzubringende Putzmasse sichergestellt ist, dass sich etwaige irreversible Formveränderungen des Dämmelementes sowie dadurch bedingte Fugen- oder Rissbildungen zwischen zwei Dämmelementen nicht in der Putzschicht abzeichnen. Denn die Putzmasse kann zum Einen in einer Schichtstärke entsprechend der einer rein mineralisch gebundenen Putzmasse aufgetragen werden, zum Anderen erweist sich eine aus einer solchen Putzmasse hergestellte Putz- und/oder Armierungsschicht durch den enthaltenen Anteil organischer Bindemittel als ausreichend flexibel, um die über die Formveränderungen der Dämmschicht in die Putzschicht eingebrachten Spannungen zu kompensieren. Letzteres kommt insbesondere in hohen Werten hinsichtlich der Bruchdehnung zum Ausdruck, die nur geringfügig unter denen rein organisch gebundener Systeme, aber deutlich über denen rein mineralisch gebundener Systeme liegen. Ferner nehmen die Biegezugfestigkeit und die Druckfestigkeit gegenüber rein organisch gebundenen Systemen zu.

Vorzugsweise beträgt die Zugfestigkeit einer aus einer Putzmasse des erfindungsgemäßen Dämmsystems ausgebildeten Putz- oder Armierungsschicht > 0,5 N/mm², weiterhin bevorzugt > 1,0 N/mm². Der Wert für die Bruchdehnung liegt bevorzugt über 0,1 %, weiterhin bevorzugt über 0,2 %, noch bevorzugter über 0,3 %.

Des Weiteren vorzugsweise beträgt die Biegezugfestigkeit >3,0 N/mm², weiterhin vorzugsweise > 3,5 N/mm². Die Druckfestigkeit beträgt vorzugsweise >5, 0 N/mm², weiterhin vorzugsweise > 6,0 N/mm².

Die pastöse erste Komponente der Putzmasse eines erfindungsgemäßen Dämmsystems weist vorzugsweise folgende Zusammensetzung auf, wobei sich die Angaben in Gew.-% jeweils auf das Gesamtgewicht der pastösen ersten Komponente beziehen:

| | |
|---|---|
| 2 - 20 Gew.-% | mineralische Bindemittel, wie beispielsweise Zement, insbesondere Calciumaluminatzement, Gips, Kalkhydrat, Wasserglas und/oder Kieselsol, |
| 2 - 20 Gew.-% | organische Bindemittel, wie beispielsweise Polymerdispersionen und/oder Silikonharzdispersionen, |
| 0,01 - 4 Gew.-% | Verzögerer, insbesondere Borsäure und/oder Borate, |
| 5 - 80 Gew.-% | mineralische Füllstoffe, wie beispielsweise Quarz, Carbonate, Silikate, Titandioxid, |
| 0,1 - 4 Gew.-% | Additive, wie beispielsweise Emulgatoren, Hydrophobierungsmittel, rheologische Additive, Entschäumer, Konservierungsmittel, |
| 5 - 40 Gew.-% | Wasser. |

Die weitere Komponente der Putzmasse des erfindungsgemäßen Dämmsystems weist vorzugsweise folgende Zusammensetzung auf, wobei sich die Angaben in Gew.-% jeweils auf das Gesamtgewicht der weiteren Komponente beziehen:

| | |
|---|---|
| 5 - 100 Gew.-% | Alkali- und/oder Erdalkaliverbindungen, wie Oxide, Hydroxide, Carbonate, Sulfate sowie deren Mischungen, insbesondere Lithiumhydroxid, Lithiumcarbonat und/oder Lithiumsulfat |
| 0 - 95 Gew.-% | mineralische Füllstoffe, wie beispielsweise Quarz, Carbonate, Silikate, Titandioxid, |
| 0 - 95 Gew.-% | Wasser. |

Die weitere Komponente kann in wässriger Phase oder als Trockenpulver vorliegen. Auch der Anteil an Füllstoffen ist optional, so dass die weitere Komponente auch ausschließlich aus Alkali- und/oder Erdalkaliverbindungen bestehen kann.

Das erfindungsgemäße Dämmsystem ist insbesondere für den Einsatz im Außenbereich gedacht, beispielsweise zur Ausbildung eines Wärmedämmverbundsystems. Darüber hinaus kann das System aber auch in Innenräumen zur Schall- und/oder Wärmedämmung eingesetzt werden.

Gemäß einer bevorzugten Verwendung des erfindungsgemäßen Dämmsystems dient dieses daher der Schall- und/oder Wärmedämmung einer Gebäudewand oder -decke. Hierzu wird zunächst das Dämmelement an der Gebäudewand- oder -decke befestigt und danach die verarbeitungsfertige, zweikomponentige Putzmasse zur Ausbildung einer ein- oder mehrlagigen Putz- und/oder Armierungsschicht in einer bzw. mehreren Lagen auf das Dämmelement aufgetragen. Bevorzugt beträgt die Schichtstärke einer Lage 1 bis 20 mm, vorzugsweise 1,5 bis 12 mm, weiterhin vorzugsweise 2 bis 8 mm. Dies ist unter anderem abhängig davon, ob die Schicht der Ausbildung einer Unterputz- bzw. Armierungsschicht oder einer Oberputzschicht dient.

Nachfolgend werden zur Erläuterung der Erfindung konkrete Ausführungsbeispiele erfindungsgemäßer Dämmsysteme bzw. ihrer Komponenten angegeben.

### Beispiel 1

Als Dämmelement findet eine Phenolharz-Hartschaumplatte Einsatz. Die hierauf aufzutragende Putzmasse dient der Ausbildung einer Armierungsschicht und umfasst eine pastöse erste Komponente sowie eine weitere Komponente, welche kurz vor der Verarbeitung der Putzmasse der ersten Komponente beigemischt wird.

Die beiden Komponenten sind wie folgt zusammengesetzt:

### (Erste Komponente)

| | |
|---|---|
| 17,00 Gew.-% | Styrolacrylat-Dispersion (50%-ig) |
| 8,00 Gew.-% | Calciumaluminatzement |
| 0,50 Gew.-% | Verzögerer |
| 2,40 Gew.-% | Additive, beispielsweise Filmbindehilfsmittel, Verdickungsmittel, Emulgatoren, Netzmittel, Entschäumer, und/oder Fasern |
| 65,00 Gew.-% | silikatische und carbonatische Füllstoffe |
| 7,10 Gew.-% | Wasser |
| 100,00 Gew.-% | |

### (Weitere Komponente)

| | |
|---|---|
| 6,00 Gew.-% | Lithiumhydroxid |
| 94,00 Gew.-% | Wasser |
| 100,00 Gew.-% | |

Der Gewichtsanteil der ersten Komponente beträgt 98,5 Gew.-% und der Gewichtsanteil der weiteren Komponente beträgt 1,5 Gew.-% bezogen auf das Gesamtgewicht der verarbeitungsfertigen Putzmasse. Die Putzmasse wird zur Ausbildung der Armierungsschicht in einer Schichtstärke von 4 mm auf das Dämmelement aufgetragen.

Eine solche auf eine Phenolharz-Hartschaumplatte aufgetragene Armierungsschicht (ohne eingelegtes Armierungsgewebe) weist folgende mechanische Eigenschaften auf:

| | |
|---|---|
| Zugfestigkeit | 2,05 N/mm² |
| Bruchdehnung | 0,7% |
| Biegezugfestigkeit | 4,40 N/mm² |
| Druckfestigkeit | 7,40 N/mm² |

Die Werte beziehen sich auf die Putz- bzw. Armierungsschicht und wurden nach ETAG 004 Anhang C und DIN EN 196 T.1 (Prismen) bestimmt.

### Beispiel 2

Als Dämmelement findet eine Polystyrol-Hartschaumplatte Einsatz. Die hierauf aufzutragende Putzmasse dient der Ausbildung einer Armierungsschicht und umfasst eine pastöse erste Komponente sowie eine weitere Komponente, welche kurz vor der Verarbeitung der Putzmasse der ersten Komponente beigemischt wird.

Die beiden Komponenten sind wie folgt zusammengesetzt:

### (Erste Komponente)

| | |
|---|---|
| 10,00 Gew.-% | Styrolacrylat-Dispersion (50%-ig) |
| 7,00 Gew.-% | Calciumaluminatzement |
| 0,40 Gew.-% | Verzögerer |
| 2,40 Gew.-% | Additive, beispielsweise Filmbindehilfsmittel, Verdickungsmittel, Emulgatoren, Netzmittel, Entschäumer, und/oder Fasern |
| 70,00 Gew.-% | silikatische und carbonatische Füllstoffe |
| 10,20 Gew.-% | Wasser |
| 100,00 Gew.-% | |

### (Weitere Komponente)

| | |
|---|---|
| 9,00 Gew.-% | Lithiumhydroxid |
| 91,00 Gew.-% | Wasser |
| 100,00 Gew.-% | |

Der Gewichtsanteil der ersten Komponente beträgt 99,0 Gew.-% und der Gewichtsanteil der weiteren Komponente beträgt 1,0 Gew.-% bezogen auf das Gesamtgewicht der verarbeitungsfertigen Putzmasse. Die Putzmasse wird zur Ausbildung der Armierungsschicht in einer Schichtstärke von 7 mm auf das Dämmelement aufgetragen.

Eine solche auf eine Polystyrol-Hartschaumplatte aufgetragene Armierungsschicht (ohne eingelegtes Armierungsgewebe) weist folgende mechanische Eigenschaften auf:

| | |
|---|---|
| Zugfestigkeit | 1,45 N/mm² |
| Bruchdehnung | 0,4 % |
| Biegezugfestigkeit | 4,00 N/mm² |
| Druckfestigkeit | 6,90 N/mm² |

Die Werte beziehen sich auf die Putz- bzw. Armierungsschicht und wurden nach ETAG 004 Anhang C und DIN EN 196 T.1 (Prismen) bestimmt.

### Beispiel 3

### (Referenzbeispiel "rein organisch gebunden")

Als Dämmelement findet wiederum eine Polystyrol-Hartschaumplatte Einsatz. Die hierauf aufzutragende Putzmasse dient der Ausbildung einer Armierungsschicht und ist rein organisch gebunden. Sie enthält 7,50 Gew.-% Styrolacrylat (Feststoffanteil) als organisches Bindemittel und weist ferner Additive, Füllstoffe und Wasser in üblichen Gewichtsanteilen auf.

Die Putzmasse wird zur Ausbildung der Armierungsschicht in einer Schichtstärke von 2,5 mm auf das Dämmelement aufgetragen.

Eine solche auf eine Polystyrol-Hartschaumplatte aufgetragene Armierungsschicht (ohne eingelegtes Armierungsgewebe) weist folgende mechanische Eigenschaften auf:

| | |
|---|---|
| Zugfestigkeit | 1,45 N/mm² |
| Bruchdehnung | 1,8 % |
| Biegezugfestigkeit | nicht bestimmbar |
| Druckfestigkeit | nicht bestimmbar |

Die Werte beziehen sich auf die Putz- bzw. Armierungsschicht und wurden nach ETAG 004 Anhang C und DIN EN 196 T.1 (Prismen) bestimmt.

### Beispiel 4

### (Referenzbeispiel "rein mineralisch gebunden")

Als Dämmelement findet wiederum eine Polystyrol-Hartschaumplatte Einsatz. Die hierauf aufzutragende Putzmasse dient der Ausbildung einer Armierungsschicht und ist rein mineralisch gebunden. Sie enthält 18,00 Gew.-% Zement als mineralisches Bindemittel und weist ferner Additive, Füllstoffe und Wasser in üblichen Gewichtsanteilen auf.

Die Putzmasse wird zur Ausbildung der Armierungsschicht in einer Schichtstärke von 7 mm auf das Dämmelement aufgetragen.

Eine solche auf eine Polystyrol-Hartschaumplatte aufgetragene Armierungsschicht (ohne eingelegtes Armierungsgewebe) weist folgende mechanische Eigenschaften auf:

| | |
|---|---|
| Zugfestigkeit | 0,25 N/mm² |
| Bruchdehnung | 0,04 % |
| Biegezugfestigkeit | 3,10 N/mm² |
| Druckfestigkeit | 6-7 N/mm² |

Die Werte beziehen sich auf die Putz- bzw. Armierungsschicht und wurden nach ETAG 004 Anhang C und DIN EN 196 T.1 (Prismen) bestimmt.

Eine Gegenüberstellung der Werte zeigt, dass bei den Beispielen 1 und 2, welche jeweils ein erfindungsgemäßes System betreffen, die Werte hinsichtlich Zugfestigkeit und Bruchdehnung sich denen rein organischer Systeme annähern (Bruchdehnung) bzw. diese sogar übertreffen (Zugfestigkeit). Zumindest liegen sie deutlich über den entsprechenden Werten rein mineralisch gebundener Systeme. Das erfindungsgemäße System neigt demnach weniger zur Rissbildung, da Spannungen besser aufgenommen werden können.

Die Werte hinsichtlich Biegezugfestigkeit und Druckfestigkeit liegen im Bereich der Werte rein mineralischer Systeme, so dass ein erfindungsgemäßes System jeweils nur die positiven Eigenschaften beider Systeme in sich vereint.

## Patentansprüche

1. Dämmsystem zur Anbringung an einem bauseitigen Untergrund umfassend wenigstens ein Dämmelement sowie eine auf das Dämmelement aufzutragende Putzmasse zur Ausbildung einer Putz- und/oder Armierungsschicht,
**dadurch gekennzeichnet, dass** die Putzmasse eine pastöse erste Komponente sowie eine vor dem Auftragen auf das Dämmelement mit der pastösen ersten Komponente zu vermischende weitere Komponente umfasst und in der pastösen ersten Komponente sowohl mineralische als auch organische Bindemittel enthalten sind, wobei das Gewichtsverhältnis organisches Bindemittel zu mineralischem Bindemittel bezogen auf den Bindemittelanteil der pastösen ersten Komponente 1:0,5 bis 1:2, vorzugsweise 1:0,75 bis 1:1,25 beträgt, wobei in der pastösen ersten Komponente ein Verzögerer, insbesondere Borsäure, Weinsäure, Zitronensäure, Phosphorsäure, deren Salze und/oder deren Derivate, und in der weiteren Komponente ein Beschleuniger, insbesondere Alkali- und/oder Erdalkaliverbindungen, wie Oxide, Hydroxide, Carbonate, Sulfate sowie deren Mischungen, insbesondere Lithiumhydroxid, Lithiumcarbonat und/oder Lithiumsulfat, enthalten sind.

2. Dämmsystem nach Anspruch 1,
**dadurch gekennzeichnet, dass** in der pastösen ersten Komponente 1 bis 30 Gew.-%, vorzugsweise 2 bis 20 Gew.-%, weiterhin vorzugsweise 2 bis 15 Gew.-%, mineralische Bindemittel, wie beispielsweise Zement, insbesondere Calciumaluminatzement, Gips, Kalkhydrat, Wasserglas und/oder Kieselsol bezogen auf das Gesamtgewicht der pastösen ersten Komponente enthalten sind.

3. Dämmsystem nach Anspruch 1 oder 2,
**dadurch gekennzeichnet, dass** in der pastösen ersten Komponente 1 bis 30 Gew.-%, vorzugsweise 2 bis 20 Gew.-%, weiterhin vorzugsweise 2 bis 15 Gew.-% organische Bindemittel, wie beispielsweise Polymerdispersionen und/oder Silikonharzdispersionen, enthalten sind.

4. Dämmsystem nach einem der vorhergehenden Ansprüche,
**dadurch gekennzeichnet, dass** der Anteil der pastösen ersten Komponente wenigstens 70 Gew.-%, vorzugsweise wenigstens 90 Gew.-%, und/oder der Anteil der weiteren Komponente maximal 30 Gew.-%, vorzugsweise maximal 10 Gew.-%, bezogen auf das Gesamtgewicht der verarbeitungsfertigen Putzmasse beträgt.

5. Dämmsystem nach einem der vorhergehenden Ansprüche,
**dadurch gekennzeichnet, dass** das Dämmelement eine Schall- und/oder Wärmedämmplatte ist und ein Schall- und/oder Wärmedämmmaterial, wie beispielsweise Phenolharz, expandiertes Polystyrol, Polyurethan und/oder Mineralwolle, umfasst.

6. Dämmsystem nach einem der vorhergehenden Ansprüche,
**dadurch gekennzeichnet, dass** die Zugfestigkeit einer aus der Putzmasse ausgebildeten Putz- und/oder Armierungsschicht > 0,5 N/mm², vorzugsweise > 1,0 N/mm² und/oder die Bruchdehnung >0,1 %, vorzugsweise > 0,2%, weiterhin vorzugsweise >0,3 % beträgt bzw. betragen, wobei die Werte nach ETAG 004 Anhang C und DIN EN 196 T.1 (Prismen) bestimmt werden.

7. Dämmsystem nach einem der vorhergehenden Ansprüche,
**dadurch gekennzeichnet, dass** die Biegezugfestigkeit einer aus der Putzmasse ausgebildeten Putz- und/oder Armierungsschicht > 3,0 N/mm², vorzugsweise > 3,5 N/mm² und/oder die Druckfestigkeit > 5,0 N/mm², vorzugsweise > 6,0 N/mm² beträgt bzw. betragen, wobei die Werte nach ETAG 004 Anhang C und DIN EN 196 T.1 (Prismen) bestimmt werden.

8. Verwendung eines Dämmsystems nach einem der vorhergehenden Ansprüche zur Schall- und/oder Wärmedämmung einer Gebäudewand oder -decke, wobei zunächst das Dämmelement an der Gebäudewand- oder -decke befestigt und danach die verarbeitungsfertige, zweikomponentige Putzmasse zur Ausbildung einer ein- oder mehrlagigen Putz- und/oder Armierungsschicht in einer bzw. mehreren Lagen auf das Dämmelement aufgetragen wird.

## Claims

1. An insulation system for application on a construction subsurface, comprising at least one insulating element and a plaster compound to be spread over the insulating element to form a rendering and/or reinforcing layer,
**characterised in that** the plaster compound comprises a pasty first component and a further component that is to be mixed with the pasty first component before said compound is spread over the insulating element, and both mineral and organic binding agents are contained in the first, pasty component, wherein the organic binder and mineral binder are in a ratio from 1:0.5 to 1:2, preferably 1:0.75 to 1:1.25 relative to the total proportion of binder content in the pasty first component, wherein the pasty first component contains a retarder, particularly boric acid, tartaric acid, citric acid, phosphoric acid, salts and/or derivatives thereof, and the further component contains an accelerant, particularly alkaline or alkaline earth compounds such as oxides, hydroxides, carbonates, sulphates and mixtures thereof, particularly lithium hydroxide, lithium carbonate and/or lithium sulphate.

2. The insulation system according to claim 1,
**characterised in that** the pasty first component contains 1 to 30 % by weight, preferably 2 to 20 % by weight, more preferably 2 to 15 % by weight mineral binders, such as cement, particularly calcium aluminate cement, gypsum, calcium hydroxide, water glass and/or silica sol relative to the total weight of the pasty first component.

3. The insulation system according to either of claims 1 or 2,
**characterised in that** the pasty first component contains 1 to 30 % by weight, preferably 2 to 20 % by weight, more preferably 2 to 15 % by weight organic binders, such as polymer dispersions and/or silicone resin dispersions.

4. The insulation system according to any one of the preceding claims,
**characterised in that** the first pasty component constitutes 70 % by weight, preferably at least 90 % by weight and/or the further component constitutes 30 % by weight, preferably not more than 10 % by weight of the total weight of the plaster compound when said compound is ready for use.

5. The insulation system according to any one of the preceding claims,
**characterised in that** the insulating element is an acoustic and/or thermal insulation panel and comprises a material that insulates sound and/or heat, such as phenolic resin, expanded polystyrene, polyurethane, and/or mineral wool.

6. The insulation system according to any one of the preceding claims,
**characterised in that** the tensile strength of a rendering and/or reinforcing layer created from the plaster compound has a value > 0.5 N/mm², preferably > 1.0 N/mm² and/or the elongation at break thereof has a value of > 0.1 %, preferably > 0.2 %, more preferably > 0.3 %, said values being determined in accordance with ETAG 004 Annexe C and DIN EN 196T.1 (prisms).

7. The insulation system according to any one of the preceding claims,
**characterised in that** the bending tensile strength of a rendering and/or reinforcing layer created from the plaster compound has a value > 3.0 N/mm², preferably > 3.5 N/mm², and/or the compressive strength thereof has a value > 5.0 N/mm², preferably> 6.0 N/mm², said values being determined in accordance with ETAG 004 Annexe C and DIN EN 196T.1 (prisms).

8. Use of an insulation system according to any one of the preceding claims for acoustic and/or thermal insulation of a building wall or ceiling, wherein the insulating element is first fastened to the building wall or ceiling, and then the two-component plaster compound in a processable state for forming a single- or multi-layer plaster and/or reinforcing layer or is spread over the insulating element in one or more layers.

## Revendications

1. Système d'isolation destiné à être monté sur un support dans un bâtiment comprenant au moins un élément isolant ainsi qu'une masse de crépi destinée à être appliquée sur l'élément isolant pour créer une couche de crépi et/ou d'armature,
**caractérisé en ce que** la masse de crépi comprend un premier composant pâteux, ainsi qu'un composant supplémentaire qui doit être mélangé avec le premier composant pâteux et **en ce que** dans le premier composant pâteux sont contenus des agents liants minéraux ainsi qu'organiques, le rapport en poids des agent liant organique à agent liant minéral en rapport à la part en agents liants dans le premier composant pâteux étant de 1:0,5 à de 1:2, de préférence de 1:0,75 à de 1:1,25, dans le premier composant pâteux étant contenu un retardateur, notamment de l'acide borique, de l'acide tartrique, de l'acide citrique, de l'acide phosphorique, les sels et/ou les dérivés de ces derniers et dans le composant supplémentaire étant contenu un accélérateur, notamment des composés alcalins et/ou alcalino-terreux, tels que des oxydes, des hydroxydes, des carbonates, des sulfates, ainsi que leurs mélanges, notamment de l'hydroxyde de lithium, du carbonate de lithium et/ou du sulfate de lithium.

2. Système d'isolation selon la revendication 1,
**caractérisé en ce que** dans le premier composant pâteux sont contenus de 1 à 30 % en poids, de préférence de 2 à 20 % en poids, de manière préférée par ailleurs de 2 à 15 % en poids d'agents liants minéraux, tels que par exemple du ciment, notamment du ciment d'aluminate de calcium, de la gypse, de l'hydrate de chaux, du silicate de soude et/ou du sol de silice en rapport au poids total du premier composant pâteux.

3. Système d'isolation selon la revendication 1 ou la revendication 2,
**caractérisé en ce que** dans le premier composant pâteux sont contenus de 1 à 30 % en poids, de préférence de 2 à 20 % en poids, de manière préférée par ailleurs de 2 à 15 % en poids d'agents liants organiques, tels que par exemple des dispersions polymères et/ou des dispersions de résine de silicone.

4. Système d'isolation selon l'une quelconque des revendications précédentes,
**caractérisé en ce que** la part du premier composant pâteux est d'au moins 70 % en poids, de préférence d'au moins 90 % en poids et/ou **en ce que** la part du composant supplémentaire est d'un maximum de 30 % en poids, de préférence d'un maximum de 10 % en poids, en rapport au poids total de la masse de crépi prête à l'emploi.

5. Système d'isolation selon l'une quelconque des revendications précédentes,
**caractérisé en ce que** l'élément isolant est un panneau d'isolation acoustique et/ou d'isolation thermique et comprend une matière d'isolation phonique et/ou d'isolation thermique, telle que par exemple de la résine phénolique, du polystyrène expansé, du polyuréthane et/ou de la laine minérale.

6. Système d'isolation selon l'une quelconque des revendications précédentes,
**caractérisé en ce que** la résistance à la traction d'une couche de crépi et/ou d'une couche d'armature créée à partir de la masse de crépi est > 0,5 N/mm², de préférence > 1,0 N/mm² et/ou **en ce que** l'allongement à la rupture est > 0,1 %, de préférence > 0,2 %, de manière préférée par ailleurs > 0,3 %, les valeurs étant déterminées selon ETAG 004, annexe C et DIN EN 196 T.1 (prismes).

7. Système d'isolation selon l'une quelconque des revendications précédentes,
**caractérisé en ce que** la résistance à la traction sous pliage d'une couche de crépi et/ou d'une couche d'armature créée à partir de la masse de crépi est > 3,0 N/mm², de préférence > 3,5 N/mm² et/ou **en ce que** la résistance à la pression est > 5,0 Nmm², de préférence > 6,0 N/mm², les valeurs étant déterminées selon ETAG 004, annexe C et DIN EN 196 T.1 (prismes).

8. Utilisation d'un système d'isolation selon l'une quelconque des revendications précédentes pour l'isolation acoustique et/ou l'isolation thermique d'un mur ou d'un plafond de bâtiment, en fixant d'abord l'élément isolant sur le mur ou le plafond du bâtiment et en appliquant ensuite en une ou en plusieurs couches sur l'élément isolant la masse de crépi à deux composants prête à l'emploi pour créer une couche de crépi et/ou une couche d'armature monocouche et/ou multicouches.
